# EUROPÄISCHE PATENTSCHRIFT

(11) **EP 1 256 730 B1**
(45) Veröffentlichungstag und Bekanntmachung des Hinweises auf die Patenterteilung: **13.01.2010**
(21) Anmeldenummer: 02008891.0
(22) Anmeldetag: 20.04.2002
(51) Int. Cl.: F16C 13/02, F16C 13/00, F16J 15/16

(54) **Biegeeinstellwalzewälzlager**
Bearing for a controlled deflection calender
Palier pour rouleau à calandre au cintrage réglable

(30) Priorität: 10.05.2001 DE 10122649
(43) Veröffentlichungstag der Anmeldung: 13.11.2002
(73) Patentinhaber: Voith Patent GmbH, 89522 Heidenheim (DE)
(72) Erfinder: Wenzel, Reinhard, 47809 Krefeld (DE); Dornfeld, Peter, 47803 Krefeld (DE)

(56) Entgegenhaltungen:
- WO-A-97/23689
- CH-A5- 606 604
- DE-A1- 2 920 528
- DE-A1- 3 730 153
- DE-C1- 4 107 440
- DE-U1- 9 218 151
- US-A- 5 010 633

## Beschreibung

Die Erfindung betrifft eine Biegeeinstellwalze mit einem Walzenmantel, der mit Hilfe von Wälzlagern, die über einen Schmiermittelstrom flüssigkeitsgeschmiert sind, drehbar auf einem Joch gelagert ist, wobei axial außen neben mindestens einem Wälzlager eine Dichtungsanordnung mit einer an einem Flansch anliegenden Dichtlippe angeordnet ist.

Eine derartige Biegeeinstellwalze ist aus DE 92 18 151 U1 bekannt. Dort ist eine Biegeeinstellwalze mit einem Walzenmantel offenbart, der über Wälzlager drehbar auf einem Joch gelagert ist. Die Wälzlager sind über einen Schmiermittelstrom flüssigkeitsgeschmiert. Eine Dichtungsanordnung mit einer Radial-Wellendichtung ist axial außen neben dem Wälzlager angeordnet. Axial außerhalb der Dichtung und weiter entfernt vom Wälzlager ist eine weitere Radial-Wellendichtung angeordnet, wobei zwischen den beiden Dichtungen ein Ablaufraum gebildet wird. Der Ablaufraum ist für eine Leckage der Schmierflüssigkeit und der Kühlflüssigkeit vorgesehen. Die Kühlflüssigkeit wird über einen Kühlmittelzulauf zugeführt, wobei sie einen Druckring mit Druck belastet. Vom Druckring kann die Kühlflüssigkeit nach außen durch eine Kühlkammer und einen Rücklauf abgeführt werden. Die Kühlkammer wird dabei teilweise durch die weiter vom Wälzlager entfernte Dichtung begrenzt, die dadurch von der Kühlflüssigkeit gekühlt wird.

Biegeeinstellwalzen, die auch als Durchbiegungsausgleichswalzen bezeichnet werden, werden in der Regel als Ober- und/oder Unterwalze in einem Walzenstapel eines Kalanders eingesetzt, mit dem eine Papierbahn oder eine vergleichbare Materialbahn mit erhöhtem Druck beaufschlagt wird. Der Walzenmantel ist dabei in Pressenrichtung des Walzenstapels von hydrostatischen Stützelementen unterstützt. Diese sorgen dafür, dass der Walzenmantel auch unter Belastung eine vorbestimmte Biegelinie erhält. Gegebenenfalls wird bei einer entsprechenden Druckbeaufschlagung das Joch etwas durchgebogen.

Die Drehlagerung des Walzenmantels gegenüber dem Joch erfolgt über die erwähnten Wälzlager. Die Wälzlager sind im Betrieb laufend flüssigkeitsgeschmiert, d.h. ihnen wird ein Schmieröl zugeführt. Um zu verhindern, dass das Öl von den hydrostatischen Stützelementen im axialen Inneren des Walzenmantels und gegebenenfalls auch das Schmieröl der Wälzlager nach außen abfließen kann, sind Dichtungsanordnungen vorgesehen, die den vom Walzenmantel umschlossenen Hohlraum axial nach außen abdichten. Da die Dichtungsanordnungen bewegliche Teile gegeneinander abdichten müssen, entsteht unter Umständen eine erhebliche Reibungswärme, die mit Hilfe einer Kühlflüssigkeit, in der Regel ebenfalls ein Öl, abgeführt werden muss.

Es hat sich nun gezeigt, dass insbesondere bei höheren Rotationsgeschwindigkeiten des Walzenmantels ein gewisser Verschleiß an den Wälzlagern zu beobachten ist, der über einen für die entsprechende Drehgeschwindigkeit zu erwartenden Verschleiß hinausgeht.

Aus US 5 010 633 A ist eine Biegeeinstellwalze bekannt, die einen Walzenmantel aufweist. Der Walzenmantel ist mit Hilfe von hydrostatischen Lagern auf einem Joch gelagert. Der Walzenmantel ist über Lager in einem Lager gehäuse gehalten. Zwischen dem Lagergehäuse, dem Joch und dem Walzenmantel ist eine Dichtungs anordnung angeordnet, die eine axiale und radiale Verschiebung des Walzenmantels zulässt. Dabei ist die Dichtungsanordnung flüssigkeitsgekühlt.

Aus DE 37 30 153 A1 ist eine Walze mit einem Walzenmantel bekannt, der mit Hilfe von einem flüssigkeitsgeschmierten Wälzlager und einer Lagerglocke an einem feststehenden Joch gelagert ist. Axial außen neben dem Wälzlager ist eine Dichtungsanordnung vorgesehen. Die Schmiermittelversorgung des Wälzlagers erfolgt über eine Schmiermittelzufuhr und eine Schmiermittelabfuhr. Für die Versorgung des Walzenmantels mit Druck- und Wärmeträgerflüssigkeit ist ein vom Schmiermittelkreislauf für das Lager getrennter Kreislauf vorgesehen.

DE 41 07 440 C1 offenbart eine durchbiegungssteuerbare und beheizbare Walze mit einem Walzenmantel, der auf einem Joch mit Hilfe von Wälzlagern drehbar gelagert ist. Das Joch ist mit einer Axialbohrung versehen, die über eine Radialbohrung mit einem Verteilerraum verbunden ist. Durch die Bohrungen gelangt Arbeitsöl zum Wälzlager und in das Innere des Walzenmantels. Der Teil des Arbeitsöls, der in das Wälzlager gelangt, dient als Schmiermittel und gleichzeitig zur Kühlung des Endes des Walzenmantels. Ausgehend vom Wälzlager wird das Arbeitsöl axial nach außen durch einen an der Innenseite einer Gleitringdichtung gebildeten Strömungskanal geführt, wobei die durch Gleitreibung entstehende Wärme abgeführt wird. Über eine Radialbohrung und eine Axialbohrung wird das Arbeitsöl zurück in einen Vorratsbehälter geleitet.

Aus DE 29 20 528 A ist eine gattungsbildende Durchbiegungseinstellwalze bekannt, wobei ein Walzenmantel mittels Wälzlagern drehbar auf einem Träger gelagert ist. Axial außen neben einem mit Hydrauliköl geschmierten Wälzlager ist eine an einem Flansch anliegende Wellendichtung angeordnet. Zum Abstreifen und Ableiten des Hydrauliköls aus dem Lagerraum sind zwischen der Dichtung und dem Wälzlager zwei Ablaufrohre vorgesehen, welche mit ihren Mündungen in entgegengesetzten Richtungen angeordnet sind.

Der Erfindung liegt die Aufgabe zugrunde, Verschleiß bei den Wälzlagern zu verhindern.

Diese Aufgabe wird bei einer Biegeeinstellwalze der eingangs genannten Art dadurch gelöst, dass die axial außen liegende Dichtungsanordnung eine Kühlflüssigkeitsversorgung aufweist und der für den Schmiermittelstrom von dem Wälzlager vorgesehene erste Entsorgungspfad von einem zweiten Entsorgungspfad für einen Kühlflüssigkeitsstrom von der Dichtungsanordnung getrennt ist.

Man führt den beobachteten Verschleiß an den Wälzlagern darauf zurück, dass bei höheren Rotationsgeschwindigkeiten des Walzenmantels auch eine entsprechend höhere Kühlleistung an der Dichtungsanordnung erforderlich ist. Diese Kühlleistung wird durch einen größeren Ölstrom aufgebracht. Dieses größere zugeführte Ölvolumen führt nun aber dazu, dass sich in dem Bereich zwischen dem Wälzlager und der Dichtungsanordnung ein eingeschlossenes Ölvolumen bildet, das mit der Geschwindigkeit des Walzenmantels rotiert. Dabei besteht die Gefahr, dass der Käfig des Wälzlagers, der normalerweise mit etwa der halben Rotationsgeschwindigkeit des Walzenmantels umläuft, über diese Geschwindigkeit hinaus beschleunigt wird. Dies führt zu einem unerwünschten Gleiten der Wälzkörper im Wälzlager und damit zu einem stärkeren Verschleiß der Wälzkörper. Wenn man nun, wie dies erfindungsgemäß vorgesehen ist, den Kühlmittelstrom vom Schmiermittelstrom auf der Abflussseite entkoppelt, dann kann man dafür sorgen, dass der Druck auf der der Dichtungsanordnung zugewandten Seite des Wälzlagers nicht über ein kritisches Maß hinaus ansteigt. Wenn man sich vor Augen hält, dass der Bedarf an Kühlflüssigkeit etwa fünfmal so groß ist wie der Bedarf an Schmiermittel, dann ist leicht einzusehen, dass durch ein getrenntes Abführen dieser beiden Flüssigkeitsströme eine kritische Druckbelastung auf der der Dichtungsanordnung zugewandten Seite des Lagers vermieden werden kann. Darüber hinaus hat diese Anordnung den Vorteil, dass der Schmiermittelstrom, also der Umlauf des Schmieröls, und der Kühlmittelstrom, also der Umlauf des Kühlmittels, getrennt gehandhabt werden können. Man kann beispielsweise dafür sorgen, dass der Kühlmittelstrom anders gekühlt wird als der Schmiermittelstrom. Damit kann man jeweils günstige Bedingungen schaffen und beispielsweise die Viskosität des Schmieröles besser einstellen. Im ersten Entsorgungspfad ist eine Abfördereinrichtung vorgesehen. Man begnügt sich also nicht nur damit, das Schmieröl und das Kühlöl getrennt voneinander abfließen zu lassen. Für das Schmieröl verwendet man gezielt Mittel, die dafür sorgen, dass es aus dem Bereich an der axialen Seite des Wälzlagers entfernt wird.

Vorzugsweise ist die Abfördereinrichtung als Schöpfer ausgebildet. Ein derartiger Schöpfer ist an sich bekannt. Schöpfer werden eingesetzt, um eine Ölschicht, die sich an der Innenseite des umlaufenden Walzenmantels bildet, abzuschöpfen. Durch die Relativgeschwindigkeit zwischen dem Schöpfer und dem umlaufenden Walzenmantel wird das am Walzenmantel anhaftende Öl in den Schöpfer hineingedrückt, und zwar mit einem Druck, der ausreicht, um das Schmieröl radial nach innen zu fördern.

Hierbei ist besonders bevorzugt, dass der Schöpfer zwei einander entgegengesetzte Öffnungen aufweist, die in Drehrichtung des Walzenmantels gerichtet sind und die mit einer Abflussleitung verbunden sind, wobei zwischen beiden Öffnungen eine verschwenkbare Klappe angeordnet ist, die bei Druck in der einen Öffnung die jeweils andere Öffnung verschließt. Mit einem derartigen Schöpfer ist man in der Lage, ohne Umbauten und ohne Eingriffe von außen die Drehrichtung der Walze zu ändern und gleichzeitig die Abförderwirkung des Schöpfers beizubehalten. Schmieröl kann grundsätzlich durch jede der beiden Öffnungen in den Schöpfer hineinfließen. Welche Öffnung letztendlich verwendet wird, hängt von der Drehrichtung des Walzenmantels ab. Das Schmieröl fließt in die Öffnung des Schöpfers hinein, die der Drehrichtung entgegen gerichtet ist. Das einfließende Öl erzeugt nun einen Druck auf die Klappe, der die Klappe verschwenkt und damit die andere Öffnung verschließt.

Das Öl kann also durch die andere Öffnung nicht abfließen, sondern wird in die Abflußleitung gedrückt.

Vorzugsweise fördert die Abfördereinrichtung Schmiermittel zumindest bis zu einem Pegel ab, der radial außerhalb der Wälzkörper des Wälzlagers liegt. Es ist nicht erforderlich, das Schmieröl vollständig abzufördern. In vielen Fällen wäre dies auch nur mit einem relativ großen technischen Aufwand möglich. Man sorgt aber dafür, daß der Schöpfer das Schmieröl so weit abfördert, daß es die Wälzkörper des Wälzlagers nicht mehr beaufschlagen kann, sondern nur noch auf den Außenring des Wälzlagers drückt.

Vorzugsweise weist die Dichtungsanordnung einen mit dem Joch verbundenen Dichtring mit einer radial nach außen ragenden Dichtlippe auf. Die Dichtlippe wirkt mit einem Flansch zusammen, der am Walzenmantel befestigt ist und sich im wesentlichen parallel zum Walzenmantel erstreckt. Wenn man die Dichtungsanordnung auf diese Weise ausbildet, dann benötigt die Dichtungsanordnung nur einen vergleichsweise kleinen Bauraum. Es steht also genügend Platz zur Verfügung, um die beiden Entsorgungspfade getrennt zu führen. Die radial nach außen ragende Dichtlippe hat den Vorteil, daß sich die Dichtwirkung mit steigender Drehzahl des Walzenmantels im Grunde nicht ändert.

In einer alternativen Ausgestaltung kann vorgesehen sein, daß die Dichtungsanordnung einen mit dem Walzenmantel verbundenen Dichtring mit einer radial nach innen ragenden Dichtlippe aufweist, wobei Spannmittel vorgesehen sind, die die Dichtlippe gegen einen Flansch am Joch vorspannen. Wenn der Dichtring mit dem Walzenmantel rotiert, dann neigt die Dichtlippe bei steigenden Drehzahlen dazu, von dem Flansch am Joch abzuheben. Damit läßt die Dichtwirkung des Dichtringes bei steigenden Drehzahlen nach. Man kann nun entweder eine dadurch bedingte Leckage in Kauf nehmen oder man kann Spannmittel vorsehen, die die Dichtlippe gegen den Flansch am Joch vorspannen. Diese Spannmittel können Federelemente sein, die die Dichtlippe auf den Flansch ziehen oder drücken. Man kann sich aber auch hydraulische Spannmittel vorstellen, bei denen ein Druck auf der radialen Außenseite der Dichtlippe aufgebaut wird, um die Dichtlippe radial nach innen gegen den Flansch zu drücken.

Vorzugsweise weist mindestens einer der beiden Entsorgungspfade einen in einem Rohr geführten Kanal auf, das einen Spalt zwischen dem Joch und einem Lagerträger überbrückt. In einigen Fällen ist das Lager und die Dichtungsanordnung nicht unmittelbar auf dem Joch montiert, sondern auf einem Lagerträger. Man kann nun einen Entsorgungspfad dadurch ausbilden, daß das entsprechende Öl in den Spalt zwischen dem Lagerträger und dem Joch abfließt und von dort weiter abgeführt werden kann. Damit eine gegenseitige Beeinflussung mit dem Öl aus dem anderen Entsorgungspfad nicht stattfindet, wird dieses Öl durch das Rohr vom Lagerträger in das Joch geführt.

Hierbei ist besonders bevorzugt, daß das Rohr im Joch und/oder im Lagerträger teleskopierend gelagert ist. Diese Ausgestaltung ist insbesondere bei Walzen mit Mantelhub vorzuziehen, bei denen der Lagerträger gegenüber dem Joch beweglich ist. In diesem Fall wird durch das Rohr der sich verändernde Abstand zwischen dem Lagerträger und dem Joch überbrückt.

Vorzugsweise sind eine Schmiermittelkammer, die einen Teil des ersten Versorgungspfades bildet, und eine Kühlmittelkammer, die einen Teil des zweiten Entsorgungspfades bildet, durch eine Labyrinthdichtung voneinander getrennt. Sowohl die Schmiermittelkammer, die dem Wälzlager benachbart ist, als auch die Kühlmittelkammer, die der Dichtungsanordnung benachbart ist, werden einerseits von Teilen begrenzt, die stationär zum Joch angeordnet sind, und andererseits durch Teile, die mit dem Walzenmantel rotieren. Man muß also auch eine entsprechende Dichtung zwischen gegeneinander bewegten Teilen vorsehen, die die Schmiermittelkammer von der Kühlmittelkammer trennt. Eine derartige Dichtung läßt sich besonders einfach durch eine Labyrinthdichtung realisieren. Eine Labyrinthdichtung ist zwar nicht dicht im hermetischen Sinne, d.h. sie läßt Flüssigkeit vom Raum höheren Drucks in einen Raum niedrigeren Drucks übertreten. Die Flüssigkeitsmenge ist aber so klein, daß sie die Druckverhältnisse in den jeweiligen Kammern nicht nennenswert negativ beeinflußt.

Die Erfindung wird im folgenden anhand von bevorzugten Ausführungsbeispielen in Verbindung mit der Zeichnung beschrieben. Hierin zeigen:
- Fig. 1: eine erste Ausführungsform einer Lageranordnung,
- Fig. 2: einen Schritt A-A durch einen Schöpfer nach Fig. 1 und
- Fig. 3: eine zweite Ausführungsform einer Lageranordnung.

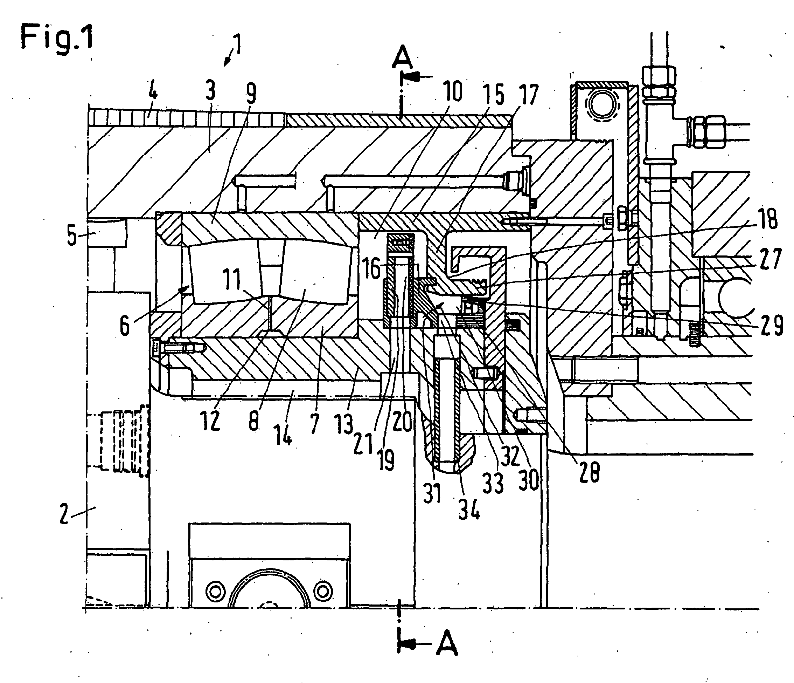

Fig. 1 zeigt schematisch eine Lageranordnung an einem axialen Ende einer Biegeeinstellwalze 1. Die Biegeeinstellwalze 1 weist ein Joch 2 auf, das einen Walzenmantel 3 durchsetzt, der als Rohr ausgebildet ist. Auf der Umfangsfläche des Walzenmantels 3 ist ein elastischer Belag 4 angeordnet. Entlang der axialen Erstreckung des Jochs 2 sind hydrostatische Stützelemente 5 angeordnet, die den Walzenmantel 3 gegenüber dem Joch 2 abstützen. Allerdings sind diese Stützelemente 5 nur in der Lage, Kräfte aufzunehmen, die in einer Pressenrichtung wirken. Der Walzenmantel 3 ist gegenüber dem Joch 2 drehbar gelagert. Hierzu ist zwischen dem Joch 2 und dem Walzenmantel 3 ein Wälzlager 6 vorgesehen, das einen Innenring 7, Wälzkörper 8 und einen Außenring 9 aufweist. Die Wälzkörper 8 sind noch durch einen nicht näher dargestellten Käfig in Umfangsrichtung miteinander verbunden. Im vorliegenden Fall handelt es sich um ein Pendelrollenlager.

Das Wälzlager 6 wird mit Schmieröl geschmiert, das über einen Schmierölkanal 11 zugeführt wird, der aus einer Nut 12 auf der radialen Innenseite des Innenrings 7 gespeist wird. Das Schmieröl fließt axial nach beiden Seiten ab. Auf der axialen Innenseite, auf der auch die Stützelemente 5 angeordnet sind, ist eine nicht näher dargestellte Abfördereinrichtung vorgesehen, die das Schmieröl zusammen mit dem aus den hydrostatischen Stützelementen 5 austretenden Öl abfördert.

Das Wälzlager 6 ist auf einem Lagerträger 13 angeordnet, der in Wirkrichtung der Stützelemente 5 gegenüber dem Joch 2 beweglich ist. Dementsprechend ist die Biegeeinstellwalze nach Fig. 1 als Walze mit Mantelhub ausgebildet. Zwischen dem Lagerträger 13 und dem Joch 2 existiert dabei ein Zwischenraum 14, dessen Höhe veränderbar ist.

Auf der axialen Außenseite des Wälzlagers 6 ist eine Schmiermittelkammer 10 angeordnet, die von dem Wälzlager 6, dem Lagerträger 13 und einem Flanschträger 15 begrenzt ist, der am Walzenmantel 3 befestigt ist und mit diesem rotiert. Eine weitere Begrenzung wird durch einen Schöpferträger 16 gebildet, der mit einer Radialwand 17 des Flanschträgers 15, die radial nach innen vorsteht, eine Labyrinthdichtung 18 bildet.

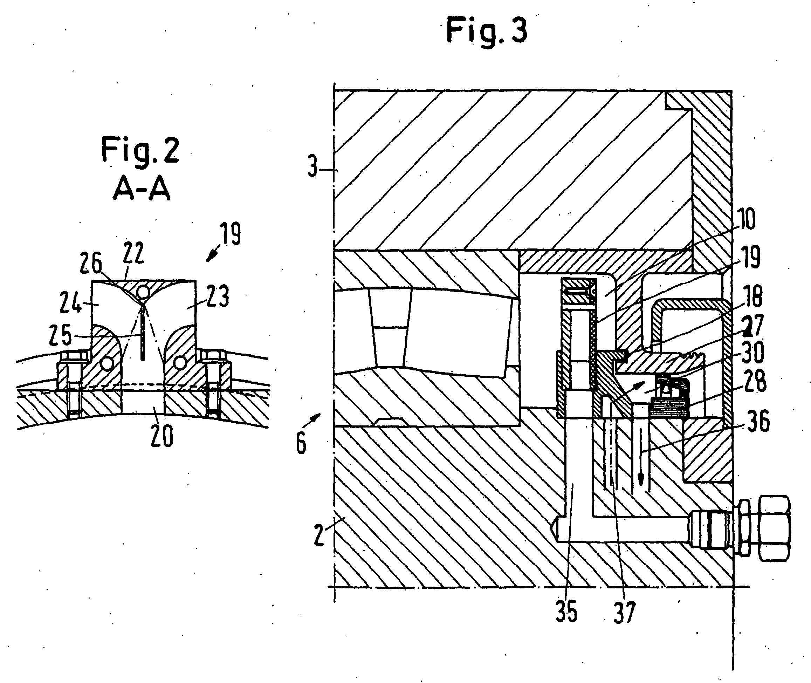

Am Schöpferträger 16 ist ein Schöpfer 19 befestigt, dessen Oberteil in Fig. 2 in vergrößerter Darstellung dargestellt ist. Im Schöpfer 19 ist eine Abflußleitung 20 vorgesehen, die sich in einem Kanal in Lagerträger 13 fortsetzt, der in den Zwischenraum 14 mündet. Der Zwischenraum 14 ist in nicht näher dargestellter Weise mit einer Rückflußleitung für das Schmieröl verbunden.

Der in Fig. 2 dargestellte Schöpfer 19 weist einen Kopf 22 auf, in dem zwei Öffnungen 23, 24 vorgesehen sind, die jeweils in Rotationsrichtung des Walzenmantels gerichtet sind und die mit der Abflußleitung 20 verbunden sind. Zwischen den beiden Öffnungen 23, 24 ist eine Klappe 25 angeordnet, die über eine Drehachse 26 am Kopf verschwenkbar gelagert ist, und zwar aus der mit durchgezogenen Linien dargestellten Position in eine gestrichelt dargestellte erste Position, in der sie die Öffnung 24 verschließt, wenn Druck an der Öffnung 23 entsteht, und in eine strichpunktiert dargestellte zweite Position, in der sie die Öffnung 23 verschließt, wenn Schmieröl unter Druck an der Öffnung 24 ansteht. Damit wird ein Umschalten des Schöpfers 19 in Abhängigkeit von der Rotationsrichtung des Walzenmantels 3 erreicht und zwar ohne Eingriffe von außen.

An der Radialwand 17 ist ein Flansch 27 angeordnet, der sich im wesentlichen parallel zum Walzenmantel 3 erstreckt. Mit dem Flansch 27 wirkt ein Dichtring 28 zusammen, der eine radial nach außen weisende Dichtlippe 29 aufweist, die an der radialen Innenseite am Flansch 27 anliegt. Der Flansch 27, der Dichtring 28, der Lagerträger 13 und der Schöpferträger 16 begrenzen zusammen eine Kühlmittelkammer 30, die einen Versorgungsan-Schluß 31 aufweist, durch den Kühlöl unter Druck gegen die Dichtlippe 29 gefördert werden kann, wie dies durch einen Pfeil 32 symbolisiert ist. Das Kühlöl füllt die Kühlmittelkammer 30 vollständig aus, so daß das zugeförderte Kühlöl das in der Kühlmittelkammer 30 vorhandene Kühlöl durch eine Öffnung 33 verdrängt, die im Lagerträger 13 ausgebildet ist. Von dort gelangt das Kühlöl durch ein Rohr 34, das teleskopierend im Lagerträger 13 geführt ist und den Spalt 14 überbrückt, in das Joch 2, wo es über nicht näher dargestellte Leitungen abgeführt werden kann.

Durch die Labyrinthdichtung 18 kann zwar eine gewisse Menge an Kühlöl aus der Kühlmittelkammer 30 in die Schmiermittelkammer 10 übertreten. Diese Menge ist jedoch vergleichsweise gering. Sie berührt nicht oder nicht in nennenswert negativen Maße die Druckverhältnisse in der Schmiermittelkammer 10.

Schmieröl, das in einer Menge von etwa 2 ℓ/min dem Wälzlager 6 zugeführt wird, gelangt in die Schmiermittelkammer 10 und wird von dort mit Hilfe des Schöpfers 19 abgefördert. Der Schöpfer 19 ist dabei so ausgerichtet, daß er das Öl, das sich aufgrund der Zentrifugalkraft an der Innenseite des Flanschträgers 15 sammelt, abschöpft, und zwar über einen Pegel hinaus, an dem das dort befindliche Öl die Wälzkörper 8 beaufschlagen kann. Die Wälzkörper 8 werden also nicht durch einen Druck in der Schmiermittelkammer 10 belastet. Dort baut sich im Grunde auch gar kein Druck auf.

Das Kühlöl hingegen, das mit einer Menge von etwa 10 ℓ/min in die Kühlmittelkammer 30 gefördert wird, gelangt in einem getrennten Versorgungspfad durch das Rohr 34 zurück ins Joch. Die Kreisläufe von Kühlöl und Schmieröl sind daher jedenfalls in der unmittelbaren Nähe des Lagers 6 voneinander entkoppelt.

Dadurch, daß die Dichtungsanordnung einen Dichtring 28 mit einer radial nach außen ragenden Dichtlippe 29 verwendet, baut die Dichtungsanordnung sehr klein. Dadurch steht ein vergrößerter Bauraum axial außerhalb des Wälzlagers zur Verfügung, den man für die Trennung von Kühlöl und Schmieröl ausnutzen kann.

Fig. 3 zeigt eine etwas abgewandelte Ausführungsform, bei der gleiche Teile mit gleichen Bezugszeichen und einander entsprechende Teile mit gestrichenen Bezugszeichen versehen sind.

Im Unterschied zu der Ausbildung nach Fig. 1 ist die Biegeeinstellwalze nicht mehr als Mantelhubwalze ausgebildet. Das Wälzlager 6 ist ohne Zwischenschaltung eines Lagerträgers fest auf dem Joch 2 gelagert. Dementsprechend läßt sich das vom Schöpfer 19 abgeschöpfte Öl unmittelbar in einen Rücklaufkanal 35 abfördern. Auch die Kühlmittelkammer 30 ist unmittelbar mit einem Ablaufkanal 36 verbunden. Ferner ist ein Zulaufkanal 37 vorgesehen, über den Kühlöl in die Kühlmittelkammer 30 gefördert wird. Im übrigen ist die Wirkungsweise dieser Lageranordnung mit der der Fig. 1 vergleichbar.

Man kann auch den Dichtring 28 am Flansch 27 anordnen, wenn man dafür sorgt, daß Spannmittel vorhanden sind, die ein Abheben der Dichtlippe 29 von einem entsprechend jochfesten Flansch verhindern. Eine derartige Ausbildung kann man beispielsweise bei langsamer laufenden Walzen verwenden.

## Patentansprüche

1. Biegeeinstellwalze (1) mit einem Walzenmantel (3), der mit Hilfe von Wälzlagern (6), die über einen Schmiermittelstrom flüssigkeitsgeschmiert sind, drehbar auf einem Joch (2) gelagert ist, wobei axial außen neben mindestens einem Wälzlager (6) eine Dichtungsanordnung (28) mit einer an einem Flansch (27) anliegenden Dichtlippe (29) angeordnet ist, und wobei für den Schmiermittelstrom von dem Wälzlager ein erster Entsorgungspfad (10, 19, 20, 21) vorgesehen ist, in welchem an der axialen Außenseite des Wälzlagers (6) eine Abfördereinrichtung (19) vorgesehen ist **dadurch gekennzeichnet, dass** die axial außen angeordnete Dichtungsanordnung (28) eine Kühlflüssigkeitsversorgung aufweist und der für den Schmiermittelstrom von dem Wälzlager (6) vorgesehene erste Entsorgungspfad (10, 19, 20, 21) von einem zweiten Entsorgungspfad (30, 33, 34) für einen Kühlflüssigkeitsstrom von der Dichtungsanordnung (28) getrennt ist.

2. Walze nach Anspruch 1, **dadurch gekennzeichnet, daß** die Abfördereinrichtung als Schöpfer (19) ausgebildet ist.

3. Walze nach Anspruch 2, **dadurch gekennzeichnet, daß** der Schöpfer (19) zwei einander entgegengesetzte Öffnungen (23, 24) aufweist, die Drehrichtung des Walzenmantels (3) gerichtet sind und die mit einer Abflußleitung (20) verbunden sind, wobei zwischen beiden Öffnungen (23, 24) eine verschwenkbare Klappe (25) angeordnet ist, die bei Druck in einer Öffnung (23, 24) die jeweils andere Öffnung (24, 23) verschließt.

4. Walze nach einem der Ansprüche 1 bis 3, **dadurch gekennzeichnet, daß** die Abfördereinrichtung (19) Schmiermittel zumindest bis zu einem Pegel abfördert, der radial außerhalb der Wälzkörper (8) des Wälzlagers (6) liegt.

5. Walze nach einem der Ansprüche 1 bis 4, **dadurch gekennzeichnet, daß** die Dichtungsanordnung einen mit dem Joch (2) verbundenen Dichtring (28) mit einer radial nach außen ragenden Dichtlippe (29) aufweist.

6. Walze nach einem der Ansprüche 1 bis 4, **dadurch gekennzeichnet, daß** die Dichtungsanordnung einen mit dem Walzenmantel verbundenen Dichtring mit einer radial nach innen ragenden Dichtlippe aufweist, wobei Spannmittel vorgesehen sind, die die Dichtlippe gegen einen Flansch am Joch vorspannen.

7. Walze nach einem der Ansprüche 1 bis 6, **dadurch gekennzeichnet, daß** mindestens einer der beiden Entsorgungspfade einen in einem Rohr (34) geführten Kanal aufweist, das einen Spalt (14) zwischen dem Joch (2) und einem Lagerträger (13) überbrückt.

8. Walze nach Anspruch 7, **dadurch gekennzeichnet, daß** das Rohr (34) im Joch (2) und/oder im Lagerträger (13) teleskopierend gelagert ist.

9. Walze nach einem der Ansprüche 1 bis 7, **dadurch gekennzeichnet, daß** eine Schmiermittelkammer (10), die einen Teil des ersten Entsorgungspfades bildet, und eine Kühlmittelkammer (30), die einen Teil des zweiten Entsorgungspfades bildet, durch eine Labyrinthdichtung (18) voneinander getrennt sind.

## Claims

1. Controlled deflection roll (1) having a roll shell (3) which is rotatably mounted on a yoke (2) with the aid of bearings (6) which are lubricated with liquid via a lubricant stream, axially outside beside at least one bearing (6) there being arranged a sealing arrangement (28) having a sealing lip (29) bearing on a flange (27), and a first disposal path (10, 19, 20, 21) being provided for the lubricant stream from the bearing, in which path a discharge device (19) is provided on the axial outer side of the bearing (6), **characterized in that** the sealing arrangement (28) arranged axially on the outside has a cooling fluid supply, and the first disposal path (10, 19, 20, 21) provided for the lubricant stream from the bearing (6) is separated from a second disposal path (30, 33, 34) for a cooling fluid stream from the sealing arrangement (28).

2. Roll according to Claim 1, **characterized in that** the discharge device is constructed as a bailer (19).

3. Roll according to Claim 2, **characterized in that** the bailer (19) has two mutually opposite openings (23, 24), which are oriented in the direction of rotation of the roll shell (3) and which are connected to a drain line (20), between the two openings (23, 24) there being arranged a pivotable flap (25) which, when there is pressure in one opening (23, 24), closes the respective other opening (24, 23).

4. Roll according to one of Claims 1 to 3, **characterized in that** the discharge device (19) discharges lubricant at least down to a level which lies radially outside the antifriction elements (8) of the bearing (6).

5. Roll according to one of Claims 1 to 4, **characterized in that** the sealing arrangement has a sealing ring (28) that is joined to the yoke (2) and has a sealing lip (29) projecting radially outwards.

6. Roll according to one of Claims 1 to 4, **characterized in that** the sealing arrangement has a sealing ring that is joined to the roll shell and has a sealing lip projecting radially inwards, clamping means being provided which prestress the sealing lip against a flange on the yoke.

7. Roll according to one of Claims 1 to 6, **characterized in that** at least one of the two disposal paths has a duct which is led in a tube (34) which bridges over a gap (14) between the yoke (2) and a bearing support (13).

8. Roll according to Claim 7, **characterized in that** the tube (34) is mounted telescopically in the yoke (2) and/or in the bearing support (13).

9. Roll according to one of Claims 1 to 7, **characterized in that** a lubricant chamber (10), which forms part of the first disposal path, and a coolant chamber (30), which forms part of the second disposal path, are separated from each other by a labyrinth seal (18).

## Revendications

1. Rouleau à cintrage réglable (1) avec une enveloppe de rouleau (3), qui est montée de façon rotative sur une armature (2) au moyen de roulements à rouleaux (6), qui sont lubrifiés par un liquide au moyen d'un courant d'agent lubrifiant, dans lequel un dispositif d'étanchéité (28) avec une lèvre d'étanchéité (29) appliquée sur une bride (27) est disposée axialement à l'extérieur à côté d'au moins un roulement à rouleaux (6), et dans lequel il est prévu pour le courant d'agent lubrifiant un premier chemin d'élimination (10, 19, 20, 21) à partir du roulement à rouleaux, dans lequel il est prévu un système d'évacuation (19) sur le côté axialement extérieur du roulement à rouleaux (6), **caractérisé en ce que** le dispositif d'étanchéité (28) disposé axialement à l'extérieur comporte une source de liquide de refroidissement et le premier chemin d'élimination (10, 19, 20, 21) prévu à partir du roulement à rouleaux (6) pour le courant d'agent lubrifiant est séparé d'un deuxième chemin d'élimination (30, 33, 34) à partir du dispositif d'étanchéité (28) pour un courant de liquide de refroidissement.

2. Rouleau selon la revendication 1, **caractérisé en ce que** le dispositif d'évacuation se présente sous la forme d'un autodistributeur (19).

3. Rouleau selon la revendication 2, **caractérisé en ce que** l'autodistributeur (19) présente deux ouvertures opposées l'une à l'autre (23, 24), qui sont orientées dans le sens de rotation de l'enveloppe de rouleau (3) et qui sont raccordées à une conduite d'évacuation (20), dans lequel un clapet pivotant (25) est disposé entre les deux ouvertures (23, 24), et ferme chaque fois une ouverture (23, 24) en cas de pression dans l'autre ouverture (24, 23).

4. Rouleau selon l'une quelconque des revendications 1 à 3, **caractérisé en ce que** le dispositif d'évacuation (19) évacue l'agent lubrifiant au moins jusqu'à un niveau qui est situé radialement à l'extérieur des corps de roulement (8) du roulement à rouleaux (6).

5. Rouleau selon l'une quelconque des revendications 1 à 4, **caractérisé en ce que** le dispositif d'étanchéité présente une bague d'étanchéité (28) assemblée à l'armature (2), avec une lèvre d'étanchéité (29) s'étendant radialement vers l'extérieur.

6. Rouleau selon l'une quelconque des revendications 1 à 4, **caractérisé en ce que** le dispositif d'étanchéité présente une bague d'étanchéité assemblée à l'enveloppe de rouleau, avec une lèvre d'étanchéité s'étendant radialement vers l'intérieur, dans lequel il est prévu des moyens de serrage qui précontraignent la lèvre d'étanchéité contre une bride sur l'armature.

7. Rouleau selon l'une quelconque des revendications 1 à 6, **caractérisé en ce qu'**au moins un des deux chemins d'élimination présente un canal guidé dans un tube (34), qui franchit une fente (14) entre l'armature (2) et un support de palier (13).

8. Rouleau selon la revendication 7, **caractérisé en ce que** le tube (34) est monté de façon télescopique dans l'armature (2) et/ou dans le support de palier (13).

9. Rouleau selon l'une quelconque des revendications 1 à 7, **caractérisé en ce qu'**une chambre d'agent lubrifiant (10), qui forme une partie du premier chemin d'élimination, et une chambre d'agent de refroidissement (30), qui forme une partie du deuxième chemin d'élimination, sont séparées l'une de l'autre par un joint à labyrinthe (18).
